# EUROPEAN PATENT SPECIFICATION

(11) **EP 1 231 085 B1**
(45) Date of publication and mention of the grant of the patent: **25.04.2007**
(21) Application number: 02394020.8
(22) Date of filing: 11.02.2002
(51) Int. Cl.: B60G 11/56

(54) **Hydro-pneumatic suspension system**
Hydropneumatisches Aufhängungssystem
Système de suspension hydropneumatique

(30) Priority: 09.02.2001 IE 20010125
(43) Date of publication of application: 14.08.2002
(73) Proprietor: TECHNOLOGY INVESTMENTS LIMITED, County Meath (IE)
(72) Inventor: Timoney, Sean, Dublin 4 (IE); Anderson, Colin James, Kells, County Meath (IE)
(74) Representative: Schütte, Gearoid

(56) References cited:
- EP-A- 0 148 060
- EP-A- 0 351 537
- EP-A- 0 864 774
- DE-C- 19 801 055
- FR-A- 1 256 427
- GB-A- 2 300 892
- GB-A- 2 347 395
- US-A- 3 049 360
- US-A- 6 036 201
- US-A- 6 135 434
- PATENT ABSTRACTS OF JAPAN vol. 010, no. 204 (M-499), 17 July 1986 (1986-07-17) & JP 61 046702 A (TOYOTA MOTOR CORP), 7 March 1986 (1986-03-07)
- PATENT ABSTRACTS OF JAPAN vol. 015, no. 077 (M-1085), 22 February 1991 (1991-02-22) & JP 02 299914 A (SHOICHI NOMOTO), 12 December 1990 (1990-12-12)

## Description

### BACKGROUND OF THE INVENTION

### Field of the Invention

This invention relates to hydro-pneumatic springs and in particular to hydro-pneumatic springs used in vehicle suspension systems.

### Description of Related Art

A hydro-pneumatic spring uses hydraulic fluid to transmit force to a variable volume gas chamber which acts as a spring. Hydro-pneumatic suspension systems for vehicles offer a number of advantages which include a rise in spring rate as the spring is compressed into bump and the possibility of adding additional features such as integral damping, variable damping, variable ride height, and load compensation. The non-linear spring characteristic, while advantageous as the spring is compressed towards the full bump position, creates a problem as the spring is extended towards the full rebound position because at full rebound, there is usually a large residual force remaining in the spring. This has an adverse effect on vehicle roll when cornering.

The present invention is directed towards overcoming this problem.

Patent Specification Nos. US 6135434 and JP 61046702 disclose hydro-pneumatic suspension elements which incorporate a spring which opposes the force exerted by the hydro-pneumatic spring as it approaches full extension in rebound.

### BRIEF SUMMARY OF THE INVENTION

According to the invention, there is provided a suspension system for a vehicle, including means for supporting a wheel on a vehicle body, said wheel support means including a hydro-pneumatic spring, a compensating spring being provided which is associated with the hydro-pneumatic spring said compensating spring means being operable to act in opposition to the force exerted by the hydro-pneumatic spring as said hydro-pneumatic spring approaches full extension, the hydro-pneumatic spring having an oil chamber and an associated gas chamber with a separator piston or membrane therebetween characterised in that the compensating spring means is located in the oil chamber such that as the hydro-pneumatic spring extends into rebound the separator piston will compress the compensating spring means, the compensating spring means acting to reduce the force exerted by the separator piston or membrane on the oil in the oil chamber

In one embodiment of the invention there is provided a suspension system for a vehicle, including:
an upper control arm,
a lower control arm,
said control arms for supporting a wheel assembly on a body of the vehicle,
each control arm having an inner end and an outer end,
the inner end being connected by an articulated joint to the vehicle body,
the outer end being connected by an articulated joint to the wheel assembly,
a hydro-pneumatic spring having an upper end and a lower end,
the upper end being attached to the vehicle body,
the lower end being attached to one of said upper and lower control arms,
a compensating spring means which is operable as said hydro-pneumatic spring approaches full extension to act in opposition to the force exerted by the hydro-pneumatic spring.

In one embodiment, the compensating spring comprises an elastic element of solid material such as metal or rubber. The compensating spring may conveniently be provided by a coil spring.

In another embodiment the hydro-pneumatic spring has a suspension actuator which is separate from but operably connected to a hydro-pneumatic element, the suspension actuator having two parts, namely a piston which is slidably mounted within an associated cylinder, one part for connection to the vehicle body and the other part for connection to the wheel support, the hydro-pneumatic element having a chamber containing oil and a chamber containing a gas separated by a separator membrane of piston, an oil chamber within the cylinder formed between an inner end of a bore of the cylinder and the piston, said oil chamber in the cylinder communicating with the oil chamber of the hydro-pneumatic element through a damping orifice.

### BRIEF DESCRIPTION OF THE DRAWINGS

The invention will be more clearly understood by the following description of some embodiments thereof, given by way of example only, with reference to the accompanying drawings, in which:-
Fig. 1 is an elevational view illustrating the general arrangement of an independent wheel suspension system incorporating a hydro-pneumatic spring according to the invention,
Fig. 2 is a plan view of the independent suspension system of Fig. 1,
Fig. 3 is a sectional elevational view of a hydro-pneumatic spring of the independent suspension system which incorporates a compensating spring in the form of an internal coil spring,
Fig. 4 is a view similar to Fig. 1 showing the general arrangement of an independent wheel suspension system incorporating a hydro-pneumatic spring and an associated compensating spring according to a second embodiment of the invention, the compensating spring being mounted externally of the hydro-pneumatic spring and in series with a check strap which limits the extension of the hydro-pneumatic spring,
Fig. 5 is an elevational view of the independent suspension system of Fig. 4,
Fig. 6 is a schematic illustration of another hydro-pneumatic spring arrangement showing an arrangement in which a suspension actuator is separate from the hydro-pneumatic spring element and the compensating spring is internal to the hydro-pneumatic spring element and acts to reduce the force exerted by the gas on the oil as the gas volume increases towards its maximum value,
Fig. 7 is a schematic illustration of another hydro-pneumatic spring arrangement showing an arrangement in which the suspension actuator is separate from the hydro-pneumatic spring element and a compensating spring is internal to the suspension actuator and acts to reduce the force exerted by the suspension actuator as it approaches full extension,
Fig. 8 is a schematic illustration of another hydro-pneumatic spring arrangement showing an arrangement in which the suspension actuator is a double-acting hydraulic ram separate from the hydro-pneumatic spring element and the compensating spring is a second hydro-pneumatic spring element connected to the rod end of the suspension actuator and acts to reduce the force exerted by the suspension actuator as it approaches full extension, and
Fig. 9 is a graph illustrating strut characteristics of a hydro-pneumatic spring of the invention.

### DETAILED DESCRIPTION OF THE INVENTION

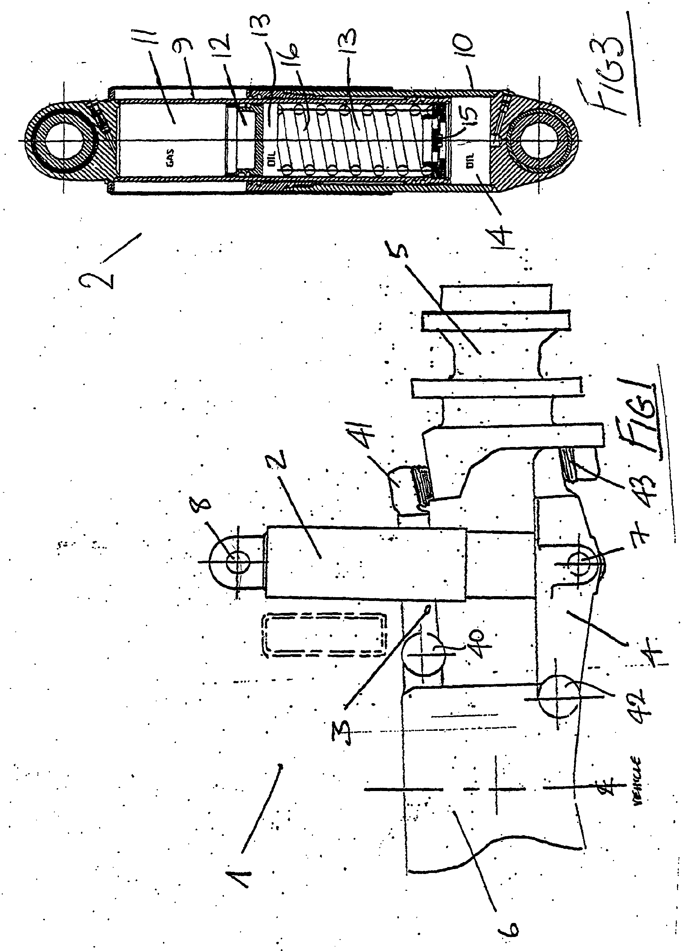

Referring to the drawings, and initially to Fig. 1 thereof, there is illustrated one side of an independent wheel suspension system according to the invention, indicated generally by the reference numeral 1, the other side of the system, which is located at an opposite side of the vehicle, being similar. The suspension system 1 incorporates a hydrostrut, hydraulic suspension actuator or hydro-pneumatic spring 2. In this case, the suspension system incorporates an upper control arm 3 and a lower control arm 4 to locate a wheel carrier 5 with respect to a vehicle body 6. The hydro-pneumatic spring 2 is connected at its upper end to the vehicle body 6 by an articulated joint 8 and at its lower end 7 to the lower control arm 4. It will be understood that this type of suspension system is shown for the purpose of illustration only and that the invention may be used in conjunction with many different types of suspension system. The hydro-pneumatic spring 2 is under compression and provides the suspension force tending to extend the suspended wheel downwardly away from the vehicle body.

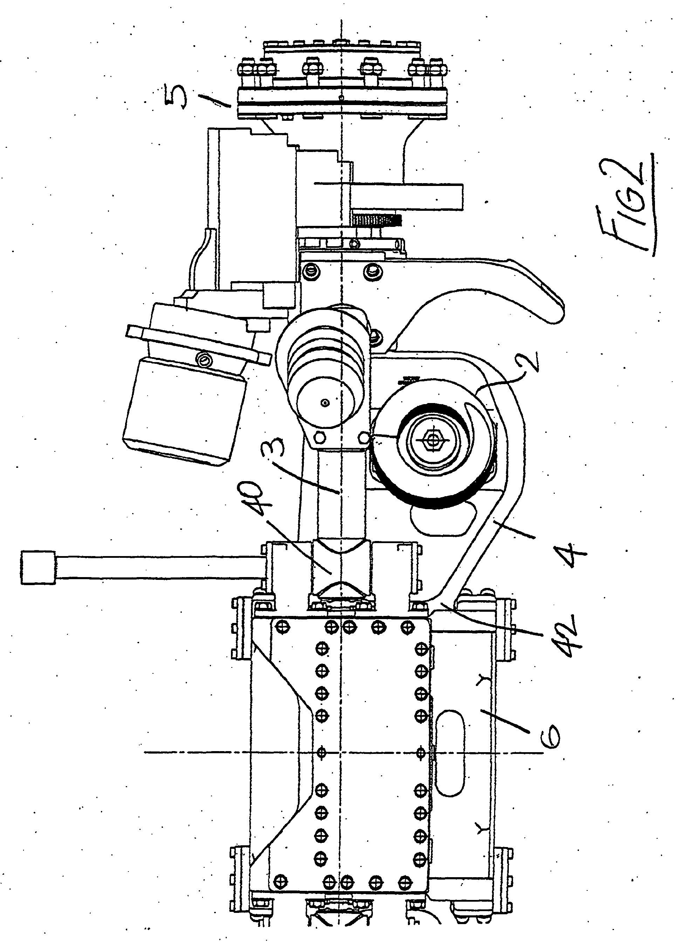

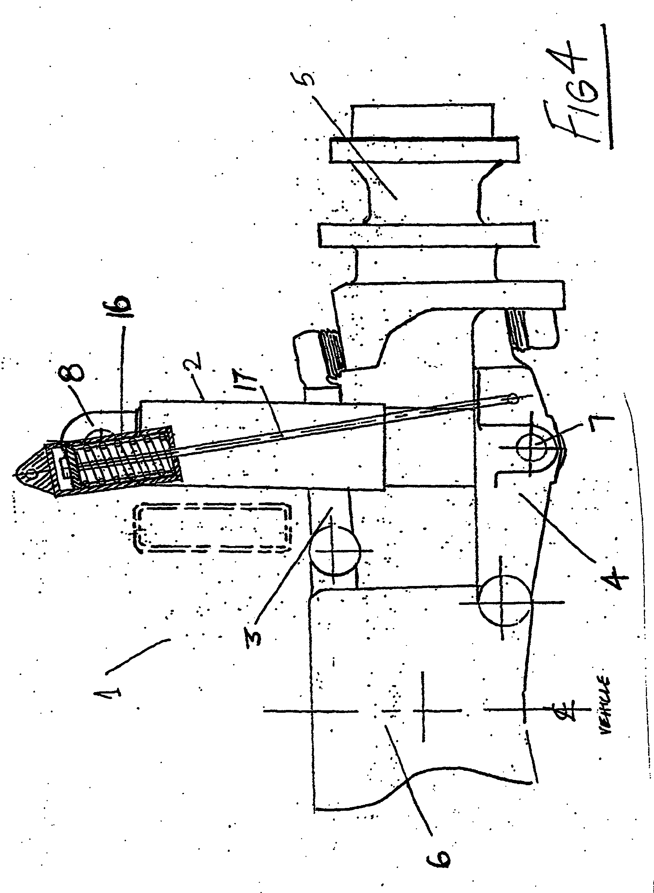

Referring to Fig. 3, there is shown a sectional view of the hydro-pneumatic spring 2 according to the invention. The hydro-pneumatic spring 2 comprises an inner cylinder 9, an inner end of which is slidable within an outer cylinder 10. The inner cylinder 9 has an upper chamber containing a variable volume of gas 11 above a separator piston 12. The remaining volume 13 of inner cylinder 9 below the separator piston 12 forms a lower chamber which is filled with oil and communicates with an oil-filled outer cylinder volume 14 through a damper orifice 15. It will be noted that in this embodiment of the invention, a compensating spring 16 is located internally of the inner cylinder 9 within the lower chamber below the separator piston 12. As the hydro-pneumatic spring 2 extends into rebound, the separator piston 12 comes into contact with the compensating spring 16 and begins to compress it. This has the effect of reducing the force exerted by the separator piston 12 on the oil in the hydro-pneumatic spring 2. The compensating spring 16 free length and stiffness may be chosen to give a hydro-pneumatic spring force which decreases gradually from a suitable load level such as the static load value to zero at full rebound, as shown in Fig. 9.

The upper control arm 3, has an inner end connected by an articulating joint 40 with the vehicle body 6. An outer end of the upper control arm 3 is connected by an articulating joint 41 with the wheel carrier 5 which is a wheel hub on which a wheel (not shown) is mounted. An inner end of the lower control arm 4 is mounted by an articulating joint 42 on the vehicle body 6. An outer end of the lower control arm 4 is connected to the wheel carrier 5 by an articulating joint 43.

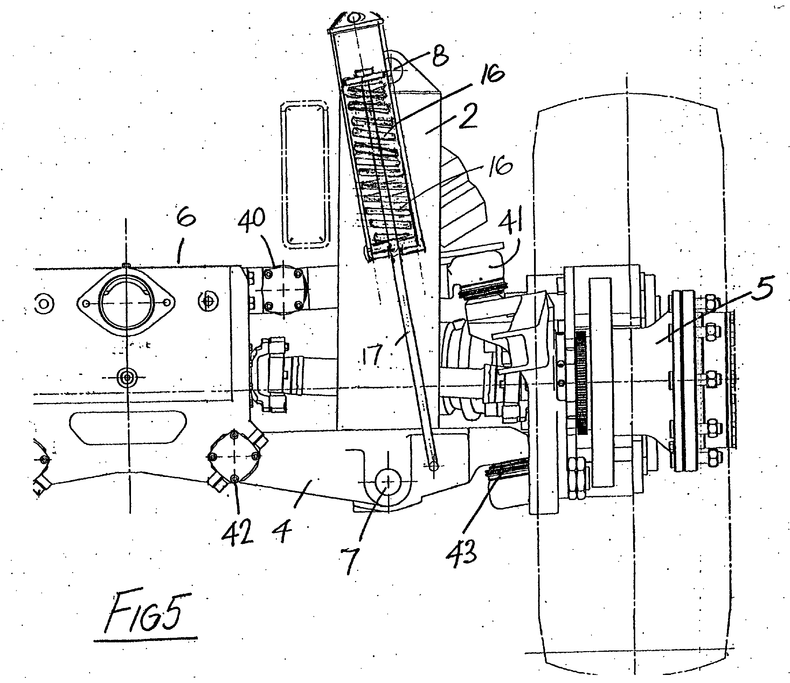

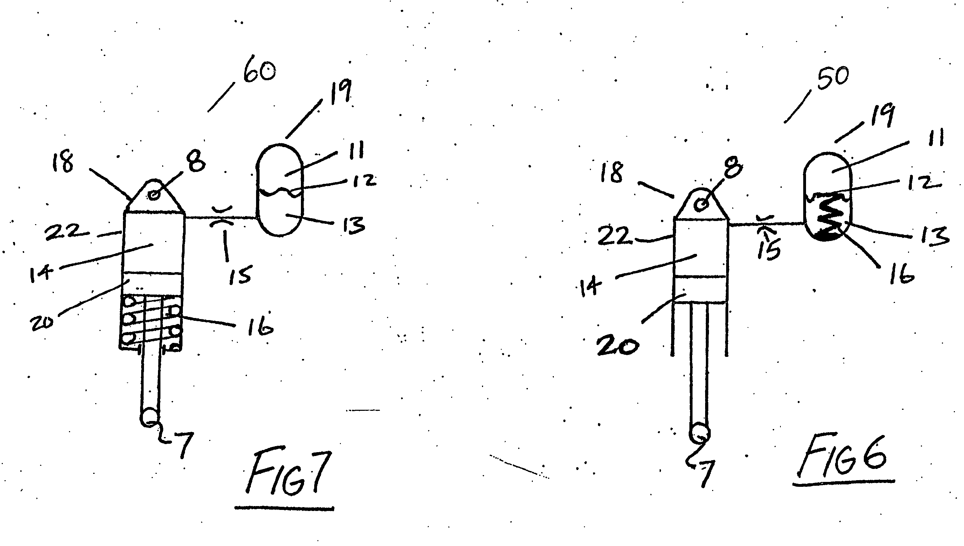

Referring now to Figs. 4 and 5, there is shown another suspension system which is largely similar to the suspension system shown in Fig. 1 and like parts are assigned the same reference numerals. In this case, a check strap 17 is provided which serves to limit the extension of the hydro-pneumatic spring 2. The check strap 17 is located between the vehicle body 6 and the lower control arm 4. It will be noted that the compensating spring 16 is in this case located externally of the hydro-pneumatic spring 2 and in series with the check strap 17. As the hydro-pneumatic spring 2 extends into rebound, the check strap 17 becomes taut and starts to compress the compensating spring 16. The force in the compensating spring 16 counteracts the residual force in the hydro-pneumatic spring 2. The compensating spring 16 free length and stiffness may be chosen to give a resultant spring force which decreases gradually from a suitable load level such as the static load value to zero at full rebound as shown in Fig. 9.

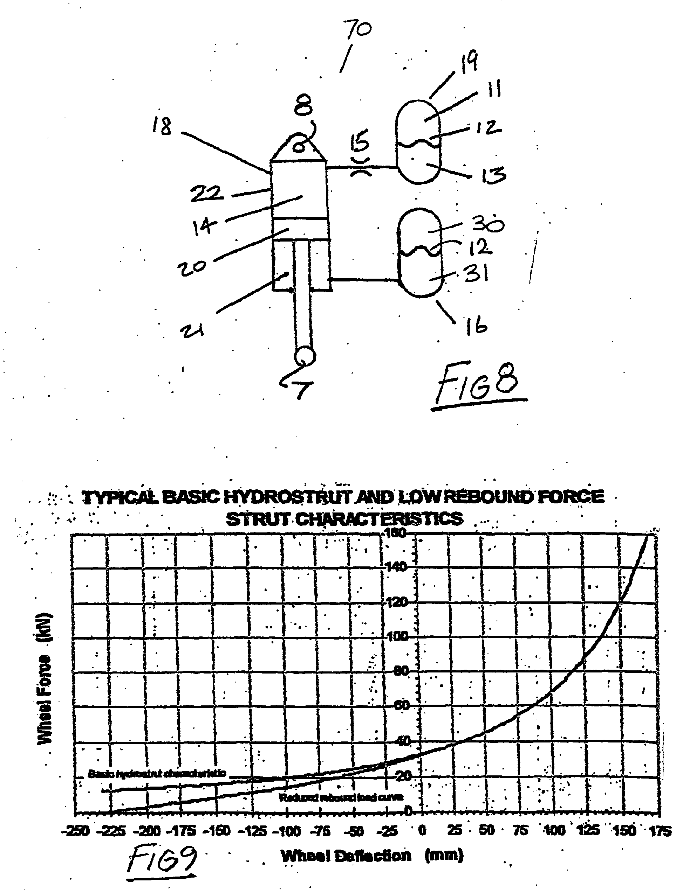

Referring now to Fig. 6, there is shown schematically another construction of suspension system 50 in which parts similar to those described previously are assigned the same reference numerals. In this case, a suspension actuator or strut 18, which is mounted between the body at 8 and the lower control arm 4 at 7, is separate from the hydro-pneumatic spring element 19. The strut 18 has a piston 20 slidable within an associated cylinder 22. An oil chamber filled with an oil volume 14 is formed between an inner bore of the cylinder 22 and the piston 20. The hydro-pneumatic spring 19 is separated into chamber with a gas volume 11 and an associated chamber with oil volume 13 by a separator membrane or piston 12. The oil volume 13 communicates with the oil volume 14 in the suspension actuator or strut 18 through damping orifice 15. The compensating spring 16 is internal to the hydro-pneumatic spring element 19 and acts to reduce the force exerted by the gas on the oil as the gas volume increases towards its maximum value in precisely the same manner as in the embodiment illustrated in Fig. 3.

Referring to Fig. 7, there is shown schematically another embodiment 60 which is largely similar to that of Fig. 6 and like parts are assigned the same reference numerals. However, in this case, the compensating spring 16 is located in the suspension strut 18 within the cylinder 22 beneath the piston 20. The strut piston 20 comes into contact with the compensating spring 16 as the suspension moves into rebound and the force in the compensating spring 16 counteracts the residual force in the suspension strut 18.

Referring now to Fig. 8, there is shown schematically another suspension system 70 in which parts similar to those described previously are assigned the same reference numerals. In this case, the suspension strut 18 is a double acting hydraulic ram separate from the hydro-pneumatic spring element 19 and the compensating spring 16 is a second hydro-pneumatic spring element connected to a rod end volume 21 of the suspension strut 18 which forms a second oil chamber in the cylinder between the piston 20 and an outer end of the cylinder 22 and acts to reduce the force exerted by the suspension strut 18 as it approaches full extension. The compensating spring 16 has a gas volume 30 and an oil volume 31 separated by a separator membrane or piston 12, the oil volume 31 being connected to the rod end volume 21 of the suspension strut 18.

It will be appreciated that the hydro-pneumatic spring 2 or strut 18, when used in an independent suspension system of the type shown in Figs. 1 and 4, may be mounted between the vehicle body 6 and either the upper control arm 3 or lower control arm 4.

The invention is not limited to the embodiments hereinbefore described which may be varied in both construction and detail within the scope of the appended claims.

## Claims

1. A suspension system (1) for a vehicle, including means (2, 3, 4, 5) for supporting a wheel on a vehicle body (6), said wheel support means (2, 3, 4, 5) including a hydro-pneumatic spring (2), a compensating spring means (16) being provided which is associated with the hydro-pneumatic spring (2), said compensating spring means (16) being operable to act in opposition to the force exerted by the hydro-pneumatic spring (2) as said hydro-pneumatic spring (2) approaches full extension, the hydro-pneumatic spring (2) having an oil chamber (13) and an associated gas chamber (11) with a separator piston (12) or membrane therebetween, **characterised in that** the compensating spring means (16) is located in the oil chamber (13) such that as the hydro-pneumatic spring (2) extends into rebound the separator piston (10) will compress the compensating spring means (16), the spring means (16) acting to reduce the force exerted by the separator piston (12) or membrane on the oil in the oil chamber (13).

2. A suspension system (1) as claimed in claim 1, including:
an upper control arm (3),
a lower control arm (4),
said control arms (3, 4) for supporting a wheel assembly on a body (6) of the vehicle,
each control arm (3, 4) having an inner end and an outer end,
the inner end being connected by an articulated joint (40, 42) to the vehicle body (6),
the outer end being connected by an articulated joint (41, 43) to the wheel assembly (5),
a hydro-pneumatic spring (2) having an upper end and a lower end,
the upper end being attached to the vehicle body (6),
the lower end being attached to one of said upper and lower control arms (3, 4)
a compensating spring means (16) which is operable as said hydro-pneumatic spring (2) approaches full extension to act in opposition to the force exerted by the hydro-pneumatic spring (2).

3. A suspension system (1) as claimed in claim 1 or 2 wherein the compensating spring comprises an elastic element of solid material.

4. A suspension system (1) as claimed in any preceding claim wherein the compensating spring is provided by a coil spring (16).

5. A suspension system (50) as claimed in any preceding claim wherein the hydro-pneumatic spring (19) has a suspension actuator (18) which is separate from but operably connected to a hydro-pneumatic element (19), the suspension actuator (18) having two parts, namely a piston (20) which is slidably mounted within an associated cylinder (22), one part (20, 22) for connection to the vehicle body (6) and the other part (20, 22) for connection to the wheel support (3, 4), the hydro-pneumatic element (19) having a chamber (11) containing oil and a chamber (13) containing a gas separated by a separator membrane (12) or piston, an oil chamber (14) within the cylinder (22) formed between an inner end of a bore of the cylinder (22) and the piston (20), said oil chamber (14) in the cylinder (22) communicating with the oil chamber (13) of the hydro-pneumatic element (19) through a damping orifice (15).

## Patentansprüche

1. Federungssystem (1) für ein Fahrzeug mit Mitteln (2, 3, 4, 5) zum Halten eines Rads an einer Fahrzeugkarosserie (6), wobei die Radhaltemittel (2, 3, 4, 5) eine hydropneumatische Feder (2) umfassen, ein Ausgleichfedermittel (16) bereitgestellt ist, das mit der hydropneumatischen Feder (2) assoziiert ist und das Ausgleichfedermittel (16) wirksam ist, entgegen der von der hydropneumatischen Feder (2) ausgeübten Kraft zu wirken, wenn sich die hydropneumatische Feder (2) der vollen Ausdehnung nähert, wobei die hydropneumatische Feder (2) eine Ölkammer (13) und eine assoziierte Gaskammer (11) mit einem Trennkolben (12) oder einer Trennmembran zwischen ihnen umfasst, **dadurch gekennzeichnet, dass** sich das Ausgleichfedermittel (16) in der Ölkammer (13) befindet, so dass, wenn sich die hydropneumatische Feder (2) in die Ausfederung ausdehnt, der Trennkolben (10) das Ausgleichfedermittel (16) zusammendrükt, wobei das Federmittel (16) wirkt, um die von dem Trennkolben (12) beziehungsweise der Trennmembran auf das Öl in der Ölkammer (13) ausgeübte Kraft zu reduzieren.

2. Federungssystem (1) nach Anspruch 1, umfassend:
einen oberen Lenkerarm (3),
einen unteren Lenkerarm (4),
wobei die Lenkerarme (3, 4) dazu dienen, eine Radeinheit an einer Karosserie (6) des Fahrzeugs zu halten,
wobei jeder Lenkerarm (3, 4) ein inneres und einäßeres Ende hat,
wobei das innere Ende durch eine Gelenkverbindung (40, 42) mit der Fahrzeugkarosserie (6) verbunden ist,
wobei das äußere Ende durch eine Gelenkverbindung (41, 43) mit der Radeinheit (5) verbunden ist,
eine hydropneumatische Feder (2) mit einem oberen Ende und einem unteren Ende,
wobei das obere Ende an der Fahrzeugkarosserie (6) angebracht ist,
wobei das unter Ende an dem oberen oder dem unteren Lenkerarm (3, 4) angebracht ist;
ein Ausgleichfedermittel (16), das wirksam ist, wenn sich die hydropneumatische Feder (2) der vollen Ausdehnung nähert, entgegen der von der hydropneumatischen Feder (2) ausgeübten Kraft zu wirken.

3. Federungssystem (1) nach Anspruch 1 oder 2, wobei die Ausgleichfeder ein elastisches Element aus Feststoff umfasst.

4. Federungssystem (1) nach einem der vorangehenden Ansprüche, wobei die Ausgleichfeder durch eine Spiralfeder (16) bereitgestellt wird.

5. Federungssystem (50) nach einem der vorangehenden Ansprüche, wobei die hydropneumatische Feder (19) ein Federungsstellglied (18) aufweist, das von einem hydropneumatischen Element (19) getrennt ist, aber wirksam mit diesem verbunden ist, wobei das Federungsstellglied (18) zwei Teile hat, nämlich einen Kolben (20), der gleitfähig in einem assoziierten Zylinder (22) angeordnet ist, ein Teil (20, 22) zur Verbindung mit der Fahrzeugkarosserie (6) und das andere Teil (20, 22) zur Verbindung mit dem Radhalter (3, 4), wobei das hydropneumatische Element (19) eine Öl enthaltende Kammer (11) und eine ein Gas enthaltende Kammer (13) aufweist, die durch eine Trennmembran (12) oder einen Trennkolben getrennt sind, wobei eine Ölkammer (14) im Zylinder (22) zwischen einem inneren Ende einer Bohrung des Zylinders (22) und dem Kolben (20) ausgebildet ist, wobei die Ölkammer (14) im Zylinder (22) durch eine Dämpfungsöffnung (15) mit der Ölkammer (13) des hydropneumatischen Elements (19) in Verbindung steht.

## Revendications

1. Système de suspension (1) pour un véhicule, comprenant des moyens (2, 3, 4, 5) servant à soutenir une roue sur une caisse de véhicule (6), lesdits moyens de support de roue (2, 3, 4, 5) incluant un ressort hydro-pneumatique (2), un moyen à ressort de compensation (16) étant prévu lequel est associé au ressort hydro-pneumatique (2), ledit moyen à ressort de compensation (16) pouvant être actionné pour agir en opposition à la force exercée par le ressort hydro-pneumatique (2) lorsque ledit ressort hydro-pneumatique (2) se rapproche de son extension totale, le ressort hydro-pneumatique (2) étant pourvu d'une chambre à huile (13) et d'une chambre à gaz associée (11) alors qu'un piston de séparation (12) ou une membrane est montée entre elles, **caractérisé en ce que** le moyen à ressort de compensation (16) est positionné dans la chambre à huile (13) de telle sorte qu'au fur et à mesure que le ressort hydro-pneumatique (2) s'étend jusqu'à la position de rebond, le piston de séparation (10) va comprimer le moyen à ressort de compensation (16), le moyen à ressort (16) agissant de façon à réduire la force exercée par le piston de séparation (12) ou la membrane sur l'huile présente dans la chambre à huile (13).

2. Système de suspension (1), selon la revendication 1, comprenant :
un bras de commande supérieur (3),
un bras de commande inférieur (4),
lesdits bras de commande (3, 4) servant à soutenir un ensemble roue sur une caisse (6) de véhicule,
chaque bras de commande (3, 4) ayant une extrémité interne et une extrémité externe,
l'extrémité interne étant raccordée à la caisse du véhicule (6) par l'intermédiaire d'un raccord articulé (40, 42),
l'extrémité externe étant raccordée à l'ensemble roue (5) par l'intermédiaire d'un raccord articulé (41, 43),
un ressort hydro-pneumatique (2) ayant une extrémité supérieure et une extrémité inférieure,
l'extrémité supérieure étant attachée à la caisse du véhicule (6),
l'extrémité inférieure étant attachée à l'un des desdits bras de commande supérieur et inférieur (3, 4),
un moyen à ressort de compensation (16) qui peut être actionné au fur et à mesure que ledit ressort hydro-pneumatique (2) se rapproche de son extension totale afin d'agir en opposition à la force exercée par le ressort hydro-pneumatique (2).

3. Système de suspension (1), selon la revendication 1 ou 2, dans lequel le ressort de compensation comprend un élément élastique réalisé en matériau plein.

4. Système de suspension (1), selon l'une quelconque des revendications précédentes, dans lequel un ressort à boudin (16) assure la fonction de ressort de compensation.

5. Système de suspension (50), selon l'une quelconque des revendications précédentes, dans lequel le ressort hydro-pneumatique (19) possède un actionneur de suspension (18) qui est séparé d'un élément hydro-pneumatique (19) mais qui est raccordé de façon opérationnelle à ce dernier, l'actionneur de suspension (18) étant composé de deux parties, notamment un piston (20) lequel est monté de façon coulissante à l'intérieur d'un cylindre associé (22), une partie (20, 22) étant destinée à être raccordée à la caisse du véhicule (6), l'autre partie (20, 22) étant destinée à être raccordée au support de roue (3, 4), alors que l'élément hydro-pneumatique (19) possède une chambre (11) contenant de l'huile ainsi qu'une chambre (13) contenant du gaz lesquelles sont séparées par une membrane de séparation (12) ou un piston, une chambre à huile (14) prévue à l'intérieur du cylindre (22) étant formée entre une extrémité interne d'un alésage du cylindre (22) et le piston (20), ladite chambre à huile (14) dans le cylindre (22) étant en communication avec la chambre à huile (13) de l'élément hydro-pneumatique (19) grâce à un orifice d'amortissement (15).
